# EUROPÄISCHE PATENTSCHRIFT

(11) **EP 0 871 279 B1**
(45) Veröffentlichungstag und Bekanntmachung des Hinweises auf die Patenterteilung: **16.02.2000**
(21) Anmeldenummer: 98104529.7
(22) Anmeldetag: 13.03.1998
(51) Int. Cl.: H02K 7/06, H02K 1/27

(54) **Rotor für einen Elektromotor**
Rotor for an electric motor
Rotor pour un moteur électrique

(30) Priorität: 10.04.1997 DE 19714780
(43) Veröffentlichungstag der Anmeldung: 14.10.1998
(73) Patentinhaber: Max Baermann GmbH, 51429 Bergisch-Gladbach (DE)
(72) Erfinder: Goltz, Jürgen, Dipl.-Ing., 60764 Langenfeld (DE); Heinrich, Alfred, Dipl.-Ing., 51429 Bergisch Gladbach (DE)
(74) Vertreter: Stachow, E.-W., Prof. Dr.

(56) Entgegenhaltungen:
- EP-A- 0 623 989
- GB-A- 2 115 618
- US-A- 4 501 981
- US-A- 5 220 224

## Beschreibung

Die Erfindung betrifft einen Rotor für einen Elektromotor, der einen außenliegenden, mit einer Öffnung versehenen Magneten und eine aus der Öffnung hervorstehende und mit dem Magneten verbundene Nabe aufweist, die an ihrem im Magneten liegenden Ende mit einem Innengewinde versehen ist. Weiterhin betrifft die Erfindung ein Verfahren zur Herstellung eines Rotors, wobei der Rotor einen außenliegenden, mit einer Öffnung versehenen Magneten und eine in der Öffnung angeordnete und mit dem Magneten verbundene Nabe aufweist, die an ihrem im Magneten liegenden Ende mit einem Innengewinde versehen ist.

Ein Rotor der vorstehend genannten Art ist aus der EP 0 623 989 A bekannt. Aus Fig. 1 dieser Druckschrift sind an der Außenseite der Nabe im Bereich des Innengewindes axial geführte Vertiefungen zur formschlüssigen Lagefixierung des Magneten zu entnehmen. Weiterhin sind an der im Bereich des Innengewindes liegenden Stirnseite des Magneten zwei sich über einen relativ kleinen axialen Bereich des Innengewindes erstreckende Nuten zu erkennen, die jedoch nicht weiter beschrieben sind. Deformationen der Nabe beim Aufpressen des Magneten führen daher leicht zu Beschädigungen oder Deformationen des Innengewindes der Nabe.

Ein Verfahren zur Herstellung eines Rotors der eingangs genannten Art ist in der US 5,220,224 A beschrieben. Die Nabe des Rotors besteht aus einem im wesentlichen zylinderförmigen, aus Metall geformtem Körper, an dessen Innenseite ein aus Kunststoff bestehendes Nabenteil durch Spritzguß ausgebildet wird. In das Innere des Nabenteils wird das Innengewinde eingeformt. Anschließend wird der starre, im wesentlichen zylinderförmige Körper mit dem Magnetwerkstoff zur Bildung eines Ringmagneten umspritzt.

Aufgrund des starren im wesentlichen zylinderförmigen Körpers werden zwar durch den Spritzdruck bei der Formung des Ringmagneten hervorgerufene Deformationen der Nabe im Bereich des Innengewindes weitgehend vermieden. Die Nabe weist jedoch einen zweiteiligen Aufbau auf.

Von diesem Stand der Technik ausgehend liegt der Erfindung die Aufgabe zugrunde, einen Rotor und ein Verfahren zu dessen Herstellung bereitzustellen, bei dem das Innengewinde der Nabe vor Beschädigungen oder Deformationen durch den Magneten während der Herstellung und während des Gebrauchs wirkungsvoll geschützt ist.

Erfindungsgemäß wird die Aufgabe dadurch gelöst, daß bei einem Rotor der eingangs genannten Art der Außendurchmesser der Nabe mindestens im Bereich des Innengewindes kleiner als der Innendurchmesser der Öffnung des Magneten in diesem Bereich ist.

Durch eine solche Ausgestaltung ist der gegen Deformationen und Beschädigungen empfindliche Teil der Nabe, nämlich der Bereich des Innengewindes, von dem umgebenden Magneten beabstandet. Durch eine solche Beabstandung von Nabe und Magnet kann keine Kraft vom Magneten auf die Nabe übertragen werden. Weiterhin ist an einem so ausgestalteten Rotor vorteilhaft, daß selbst beim Auftreten von Kräften auf die Nabe das als Bewegungsgewinde dienende Innengewinde nicht deformiert werden kann.

In einer vorteilhaften Ausführung weist der Magnet des Rotors in dem Bereich, in dem er mit der Nabe verbunden ist, innenliegend radiale Vertiefungen auf, in die die Vorsprünge der Nabe mindestens teilweise eingreifen. Durch die Verwendung solcher Vorsprünge ist die Nabe drehfest mit dem Magneten verbunden.

Eine drehfeste Verbindung kann ebenfalls durch Vertiefungen in der Nabe bewirkt werden, die beim Umspritzen mit Magnetmaterial ausgefüllt werden.

In einer bevorzugten Ausführungsform weist die Nabe in axialer Richtung einen sich an das Innengewinde anschließenden Bereich mit einer zylinderförmigen Innenwand auf, dessen Durchmesser gleich oder etwas größer als der Außendurchmesser des Innengewindes ist. Mit dem vergrößerten Durchmesser des sich an das Innengewinde anschließenden Bereichs wird eine Reibung mit einer in der Nabe angeordneten Achse vermieden. Allgemein kann der zylinderförmige Teil der Nabe auch mit einem beliebig großen Durchmesser oder sich konisch zum Innengewinde hin verjüngend ausgeführt sein. Mit einem so geformten zylindrischen Bereich kann ein leichteres Entfernen der Nabe aus dem Spritzgießwerkzeug erreicht werden.

Weiterhin kann sich an diesen Bereich in axialer Richtung ein zweiter Bereich mit einem gegenüber dem Außendurchmesser des Innengewindes erweiterten Innendurchmesser anschließen. Der zwischen den beiden Bereichen angeordnete Absatz kann bei der Verwendung einer durch die Nabe geführten Gewindespindel mit entsprechender stufenförmiger Verbreiterung als Anschlagfläche für diese dienen.

Zweckmäßigerweise weist der Magnet in dem Bereich, in dem er mit der Nabe verbunden ist, zwei Abschnitte mit unterschiedlichen Innendurchmessern auf. Durch eine solche Ausformung ist die Nabe zusätzlich in axialer Richtung gegen ein Verschieben innerhalb des Magneten gesichert.

In einer bevorzugten Ausbildung der Erfindung besteht die Nabe aus Kunststoff. Durch die mit einem Bewegungsgewinde versehene Nabe ist eine Gewindespindel geführt. Dabei erweist sich Kunststoff als ein besonders geeigneter Werkstoff, der als guter Reibpartner für verschiedene Werkstoffe einer Gewindespindel vorteilhafte Eigenschaften aufweist. Gerade bei der Verwendung eines Bewegungsgewindes ist das Vermeiden von Deformationen und Beschädigungen für ein gutes Laufverhalten von Rotor und Gewindespindel wichtig. Zur Verbesserung von thermischen und mechanischen Eigenschaften des verwendeten Kunststoffs können auch Füllstoffe verwendet werden. Durch die Verwendung von Füllstoffen können das Reibverhalten, die Wärmeleitfähigkeit und die Vibrationsdämpfung des Kunststoffs vorteilhaft beeinflußt werden. Außerdem ist die Herstellung einer Kunststoffnabe besonders preisgünstig und damit gut für eine Massenfertigung geeignet.

Ebenso kann der Magnet als ein kunststoffgebundener Magnet ausgebildet sein. Solche kunststoffgebundenen Magnete können im Spritzgußverfahren einfach und mit niedrigen Kosten hergestellt werden. Dabei kann der Magnet isotrop oder anisotrop ausgebildet sein. Bei anisotroper Herstellung wird der Magnet direkt im Werkzeug magnetisiert.

Die Aufgabenstellung wird ebenfalls durch ein Verfahren zur Herstellung eines erfindungsgemäßen Rotors gelöst. Bei dem Verfahren wird die Nabe vor dem Umspritzen mit dem Magnetwerkstoff in einen Kern eingesetzt, der die Nabe im Bereich des Innengewindes in Form eines Hohlzylinders umschließt, wobei der Innendurchmesser des Hohlzylinders im wesentlichen dem Außendurchmesser der Nabe im Bereich des Innengewindes entspricht. Nach dem Spritzen des Magneten wird der Kern aus dem Magneten entfernt. Hierbei ist der Abstand zwischen der Nabe im Bereich des Innengewindes und dem umliegenden Magneten durch die Dicke der Wand des Hohlzylinders vorgegeben. Bei diesem Herstellungsverfahren eines Rotors übt der Spritzdruck keine Kraft auf die Nabe aus. Indem der Bereich des Innengewindes der Nabe von dem Magneten beabstandet ist, kann der Spritzdruck nicht direkt auf die Nabe übertragen werden, so daß Deformationen der Nabe und des Innengewindes vermieden werden.

Eine bevorzugte Ausführungsform wird in den nachfolgenden Figuren beschrieben. Hierbei zeigt:
- Fig. 1: den Querschnitt A-A durch einen erfindungsgemäßen Rotor und
- Fig. 2: den Querschnitt B-B des erfindungsgemäßen Rotors.

Der Rotor 1 weist einen außenliegenden zylinderförmigen Magneten 2 und eine teilweise in diesem Magneten angeordnete Nabe 3 auf. Die Nabe 3 steht hierbei in axialer Richtung teilweise aus der Öffnung 13 des Magneten 2 hervor, wobei der hervorstehende Teil der Nabe 3 als ein Hohlzylinder ausgebildet ist.

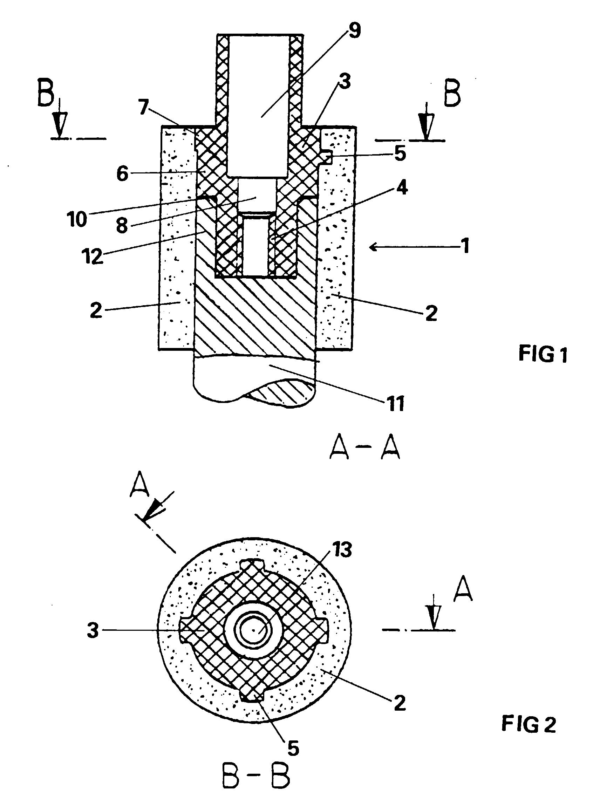

Der Außendurchmesser des vorstehenden Teils der Nabe ist, so wie in Figur 1 dargestellt, kleiner als der Innendurchmesser des Magneten 2 an dem entsprechendem Ende des Magneten 2.

An dem in dem Magneten liegenden Ende der Nabe 3 weist die Nabe 3 ein Bewegungsgewinde 4 auf, in dem eine Gewindespindel geführt sein kann. Die Nabe 3 ist in dem Bereich des Bewegungsgewindes 4 zylinderförmig und weist zu der Innenfläche des Magneten 2 einen konstanten Abstand auf.

Bei einer Drehung des Rotors 1 wird die Gewindespindel in axialer Richtung durch die Bereiche 8 und 9 bewegt. Der zwischen den Bereichen 8 und 9 liegende Absatz kann einer Verbreiterung der Gewindespindel als Anschlagfläche dienen. Der Innendurchmesser des Bereichs 8 entspricht dem Außendurchmesser des Bewegungsgewinde 4, wohingegen der Innendurchmesser des Bereichs 9 größer als der Außendurchmesser des Bewegungsgewindes 4 ist.
Die Nabe 3 ist mit dem Magneten 2 durch die Vorsprünge 5 drehfest verbunden. Die Vorsprünge 5 stehen radial aus der Nabe 3 hervor und sind vollständig von dem Magneten 2 umgeben. Eine solche Anordnung der Vorsprünge 5 in dem Magneten 2 ist erst durch das Umspritzen der mit den Vorsprüngen 5 versehenen Nabe 3 möglich.

Die Nabe 3 weist in den an dem Magneten 2 anliegenden Abschnitten 6 und 7 unterschiedliche Radien auf, durch die die Nabe 3 in axialer Richtung gegen Verschiebung gesichert ist.

Der in der Fig. 1 zusätzlich dargestellte Kern 11 dient mit seinem Hohlzylinder 12 dazu, beim Umspritzen der Nabe 3 mit dem Magneten 2 das Innengewinde 4 vor dem Spritzdruck zu schützen. Hierzu wird die Nabe 3 vor dem Umspritzen mit dem kunststoffgebundenen Magneten 2 in den Kern 11 eingesetzt.

Wie aus der Fig. 1 ersichtlich, entspricht der Innendurchmesser des Kerns 11 dem Außendurchmesser der Nabe 3 im Bereich des Innengewindes 4, womit die Nabe 3 genau in den Kern 11 einsetzbar ist. Die Stirnseite der Hohlzylinderwand 12 stützt beim Spritzen des Magneten 2 den Absatz 10 der Nabe 3 ab.

### Bezugszeichenliste

- 1: Rotor
- 2: Magnet
- 3: Nabe
- 4: Innengewinde
- 5: Vorsprung
- 6: erster Abschnitt
- 7: zweiter Abschnitt
- 8: erster Bereich
- 9: zweiter Bereich
- 10: Absatz
- 11: Kern
- 12: Hohlzylinder
- 13: Öffnung

## Patentansprüche

1. Rotor (1) für einen Elektromotor, der einen außenliegenden, mit einer Öffnung versehenen Magneten (2) und eine aus der Öffnung hervorstehende und mit dem Magneten (2) verbundene Nabe (3) aufweist, die an ihrem im Magneten (2) liegenden Ende ein Innengewinde (4) aufweist, **dadurch gekennzeichnet,** daß der Außendurchmesser der Nabe (3) mindestens im Bereich des Innengewindes (4) kleiner als der Innendurchmesser der Öffnung (13) des Magneten (2) in diesem Bereich ist.

2. Rotor (1) nach Anspruch 1, **dadurch gekennzeichnet,** daß der Magnet (2) in dem Bereich, in dem er mit der Nabe (3) verbunden ist, innenliegend radiale Vertiefungen aufweist, in die an der Nabe (3) ausgeformte Vorsprünge (5) mindestens teilweise eingreifen.

3. Rotor (1) nach einem der Ansprüche 1 oder 2, **dadurch gekennzeichnet,** daß die Nabe (3) in axialer Richtung einen sich an das Innengewinde (4) anschließenden Bereich (8) mit einer zylinderförmigen Innenwand aufweist, dessen Durchmesser gleich oder etwas größer als der Außendurchmesser des Innengewindes (4) ist.

4. Rotor (1) nach Anspruch 3, **dadurch gekennzeichnet,** daß sich an den Bereich (8) in axialer Richtung ein zweiter Bereich (9) mit einem gegenüber dem Außendurchmesser des Innengewindes (4) erweiterten Innendurchmesser anschließt.

5. Rotor (1) nach einem der Ansprüche 1 bis 4, **dadurch gekennzeichnet,** daß der mit der Nabe (3) verbundene Bereich des Magneten (2) zwei Abschnitte (6, 7) mit unterschiedlichen Innendurchmessern aufweist.

6. Rotor (1) nach einem der Ansprüche 1 bis 5, **dadurch gekennzeichnet,** daß die Nabe (3) aus Kunststoff besteht.

7. Rotor (1) nach einem der Ansprüche 1 bis 6, **dadurch gekennzeichnet,** daß der Magnet (2) als kunststoffgebundener Magnet ausgebildet ist.

8. Rotor (1) nach Anspruch 7, **dadurch gekennzeichnet,** daß der Magnet (2) isotrop ausgebildet ist.

9. Rotor (1) nach Anspruch 7, **dadurch gekennzeichnet,** daß der Magnet (2) anisotrop ausgebildet ist.

10. Verfahren zur Herstellung eines Rotors (1) nach einem der Ansprüche 1 bis 7, wobei der Rotor (1) einen außenliegenden, mit einer Öffnung versehenen und aus Magnetwerkstoff bestehenden Magneten (2) und eine aus der Öffnung hervorstehende und mit dem Magneten (2) verbundene Nabe (3) aufweist, die an ihrem im Magneten (2) liegenden Ende ein Innengewinde (4) aufweist, wobei die Nabe (3) mit dem Magnetwerkstoff umspritzt wird, **dadurch gekennzeichnet,** daß die Nabe (3) vor dem Umspritzen mit dem Magnetwerkstoff in einen Kern (11) eingesetzt wird, der die Nabe (3) in dem Bereich des Innengewindes (4) in Form eines Hohlzylinders (12) umschließt, wobei der Innendurchmesser des Hohlzylinders (12) im wesentlichen dem Außendurchmesser der Nabe (3) im Bereich des Innengewindes (4) entspricht, und der nach dem Spritzen des Magnetwerkstoffes wieder von der Nabe (3) entfernt wird.

## Claims

1. Rotor (1) for an electric motor showing an outside located magnet (2) provided with an opening out of which a hub (3) is projecting which is connected to the magnet (2) and the end inside the magnet (2) of which is equipped with an inside thread (4), **characterized in that** at least in the area of the inside thread (4) the outside diameter of the hub (3) is smaller than the inside diameter of the opening (13) of the magnet (2) in this area.

2. Rotor (1) according to Claim 1, **characterized in that** the magnet (2) shows inside radial cavities in the area where it is connected to the hub (3) and the projections (5) formed at the hub (3) are at least partially in gear with these cavities.

3. Rotor (1) according to one of the Claims 1 or 2, **characterized in that** the hub (3) shows an area (8) with a cylinder-shaped inside wall adjoining the inside thread (4) in axial direction, the diameter of this area (8) being of the same or slightly larger size than the outside diameter of the inside thread (4).

4. Rotor (1) according to Claim 3, **characterized in that** the area (8) is adjoined by a second area (9) in axial direction showing a widened inside diameter towards the inside thread (4).

5. Rotor (1) according to one of the Claims 1 through 4, **characterized in that** the area of the magnet (2) which is connected to the hub (3) shows two sections (6, 7) with different inside diameters.

6. Rotor (1) according to one of the Claims 1 through 5, **characterized in that** the hub (3) is made of plastic.

7. Rotor (1) according to one of the Claims 1 through 6, **characterized in that** the magnet (2) is layed-out as plastic-bonded magnet.

8. Rotor (1) according to Claim 7, **characterized in that** the magnet consists of isotropic material.

9. Rotor (1) according to Claim 7, **characterized in that** the magnet consists of anisotropic material.

10. Procedure for manufacturing a rotor (1) according to one of the Claims 1 through 7, with the rotor (1) showing an outside located magnet (2) made of magnetic material which is provided with an opening and a hub (3) projecting from the opening which is connected to the magnet (2), the hub (3) showing at its end inside the magnet (2) an inside thread (4) and being injection-moulded with the magnetic material, **characterized in that** the hub (3) is placed into a core (11) before being surrounded by the injection-moulded magnetic material which encloses the hub (3) in the area of the inside thread (4) in the form of a hollow cylinder (12) with the inside diameter of the hollow cylinder (12) basically corresponding to the outside diameter of the hub (3) in the area of the inside thread (4) and which is removed from the hub (3) after the magnetic material was injection-moulded.

## Revendications

1. Rotor (1) pour un moteur électrique présentant, à la périphérie, un aimant (2) pourvu d'une ouverture et un moyeu (3) sortant de l'ouverture, relié à l'aimant (2), ce moyeu (3) comportant un filetage femelle (4) à son extrémité reposant dans l'aimant (2), **caractérisé en ce que** le diamètre extérieur du moyeu (3) est plus petit, au moins dans la zone du filetage intérieur (4), que le diamètre intérieur de l'ouverture (13) de l'aimant (2) dans cette zone.

2. Rotor (1) selon la revendication 1, **caractérisé en ce que** l'aimant (2) dans cette zone, où il est relié au moyeu (3), comporte à l'intérieur des cavités radiales dans lesquelles les parties saillantes (5) formées dans le moyeu (3) s'engrènent au moins partiellement.

3. Rotor (1) selon l'une des revendications 1 ou 2, **caractérisé en ce que** le moyeu (3) comporte, dans le sens axial, une zone (8) contiguë au filetage femelle (4) pourvue d'une paroi intérieure cylindrique, le diamètre de cette zone (8) étant identique au diamètre extérieur du filetage femelle (4) ou légèrement plus grand que ce dernier.

4. Rotor (1) selon la revendication 3, **caractérisé en ce que** la zone (8) est contiguë, dans le sens axial, à une deuxième zone (9) dont le diamètre intérieur est plus élargi par rapport au diamètre extérieur du filetage femelle (4).

5. Rotor (1) selon l'une quelconque des revendications 1 à 4, **caractérisé en ce que** la zone reliée au moyeu (3) de l'aimant (2) comporte deux sections (6, 7) dotées de différents diamètres intérieurs.

6. Rotor (1) selon l'une quelconque des revendications 1 à 5, **caractérisé en ce que** le moyeu (3) est en matière plastique.

7. Rotor (1) selon l'une quelconque des revendications 1 à 6, **caractérisé en ce que** l'aimant (2) est formé d'un aimant lié avec de la matière plastique.

8. Rotor (1) selon la revendication 7, **caractérisé en ce que** l'aimant (2) est réalisé en matériau isotrope.

9. Rotor (1) selon la revendication 7, **caractérisé en ce que** l'aimant (2) est réalisé en matériau anisotrope.

10. Procédé pour fabriquer un rotor (1) selon l'une quelconque des revendications 1 à 7, **caractérisé en ce que** le rotor (1) présente, à la périphérie, un aimant (2) en matériau magnétique et pourvu d'une ouverture et, un moyeu (3) sortant de l'ouverture et relié à l'aimant (2), ce moyeu (3) comportant un filetage femelle (4) situé à son extrémité placée dans l'aimant (2), le moyeu (3) est cependant recouvert par moulage par injection, **caractérisé en ce que** le moyeu (3) est placé avant qu'il soit recouvert de matériau magnétique par moulage par injection, dans un noyau (11) qui entoure le moyeu (3) dans la zone du filetage femelle (4) sous forme d'un cylindre creux (12) avec un diamètre pratiquement identique au diamètre extérieur du moyeu (3) dans la zone du filetage femelle (4) et qui est extrait du moyeu (3) après le moulage par injection du matériau magnétique.
